Europäisches Patentamt

European Patent Office

Office européen des brevets

(11) Publication number: **0 319 839 B1**

# EUROPEAN PATENT SPECIFICATION

(45) Date of publication of patent specification: **06.05.92**   (51) Int. Cl.⁵: **C09J 7/00**, C08L 83/04

(21) Application number: **88120014.1**

(22) Date of filing: **30.11.88**

(54) **Silicone rubber adhesive films.**

(30) Priority: **30.11.87 JP 302150/87**

(43) Date of publication of application:
**14.06.89 Bulletin 89/24**

(45) Publication of the grant of the patent:
**06.05.92 Bulletin 92/19**

(84) Designated Contracting States:
**DE FR GB**

(56) References cited:
**EP-A- 0 133 336**
**EP-A- 0 219 075**
**EP-A- 0 304 676**
**US-A- 3 155 633**
**US-A- 4 418 165**

(73) Proprietor: **TORAY SILICONE COMPANY, LIMITED**
**2-3-16, Muro-machi Nihonbashi**
**Chuo-ku Tokyo 103(JP)**

(72) Inventor: **Matsushita, Takao**
**9-18, 2-chome, Onkubo**
**Kisarazu-shi Chiba Prefecture(JP)**
Inventor: **Hirai, Kazuo**
**6, 1-chome, Yushudai Nishi**
**Ichihara-shi Chiba Prefecture(JP)**

(74) Representative: **Spott, Gottfried, Dr. et al**
**Patentanwälte Spott und Puschmann**
**Sendlinger-Tor-Platz 11**
**W-8000 München 2(DE)**

## Description

The present invention relates to a silicone rubber adhesive film or sheet.

Because silicone rubber adhesives have an excellent heat resistance, durability, weathering resistance, etc., they are widely used in service which requires such characteristics. However, these silicone rubber adhesives are fluid pastes, and this places time requirements on the coating operation when used on substrates which have flat surfaces and/or large surface areas, for example, textiles, glasses, and rubber sheets, etc. Furthermore, it is also difficult to obtain a constant coating thickness. In the field of silicone rubber adhesives adapted to the adhesion of such substrates, Japanese Patent Application Laid Open [Kokai or Unexamined] Number 62-225580 [225,580/87] proposes a roll-wound adhesive in which a silicone rubber adhesive is layered on a release substrate.

However, it is difficult to manufacture this roll-wound adhesive in a thin film format due to the low tensile strength of the uncured silicone rubber composition. Also, its shape is subject to variation during application, and it must be handled with the aid of the release substrate layer in order to prevent tearing, and these factors serve to disadvantage the bonding operation.

The inventors carried out investigations in order to solve these problems and found as a result that a silicone rubber composition obtained using a special wet-method silica has an excellent tensile strength when uncured, can be manufactured in a thin film format, and also gives an excellent bonding performance. The present invention is based on this finding. Wet-process silicas and compositions made from these wet-process silicas are described by Polmanteer et al in U.S. Patent No. 4,418,165, issued November 29, 1983, in which optically clear silicone compositions are described, but do not teach sheeting the composition into uncured adhesive films.

Lutz in U.S. Patent No. 4,344,800, issued August 17, 1982, teaches methods of making hydrophobic reinforcing silica fillers and the fillers obtained by this wet method. Lee et al in U.S. Patent No. 4,454,288, issued June 12, 1984, teach a method of treating silica, and some compositions in which the silica is used, however, Lee et al do not teach silicone rubber compositions in the form of uncured adhesive sheets.

The present invention has as its object the introduction of a film-form silicone rubber adhesive which offers an excellent workability and simplicity of handling as well as an excellent storage stability, and in particular the introduction of a film-form silicone rubber adhesive which can tightly bond and unify various types of adherend pairs with flat surfaces, such as textiles, glasses, and rubber sheets, etc.

Accordingly, the present invention relates to a silicone rubber adhesive film prepared from a silicone rubber composition which has as its principal components (A) 100 parts by weight of organopolysiloxane gum having the average unit formula

$$R_n SiO_{(4 - n)/2}$$

in the formula, R is a substituted or unsubstituted monovalent hydrocarbon group and $\underline{n}$ = 1.9 to 2.1, (B) 30 to 150 parts by weight wet-method hydrophobic reinforcing silica having a specific surface area of at least 200 $m^2/g$ and composed of $SiO_2$ units and organosiloxane units selected from the group comprising $R_3SiO_{1/2}$ units, $R_2SiO$ units, $RSiO_{3/2}$ units, and their mixtures, where each R in the formulas is defined as above, with the proviso that the organosiloxane unit to $SiO_2$ unit molar ratio is 0.08 to 2.0, and (C) curing agent, wherein said silicone rubber composition is in the form of an uncured sheet which has a tensile strength at break in the range of 1.5 $kg/cm^2$ to 5.0 $kg/cm^2$.

To explain the preceding in greater detail, the group R in the above formula for the organopolysiloxane gum comprising component (A) is a substituted or unsubstituted monovalent hydrocarbon group as exemplified by alkyl groups such as methyl, ethyl, propyl, etc.; alkenyl groups such as vinyl, allyl, etc.; cycloalkyl groups such as cyclohexyl, etc.; aralkyl groups such as beta-phenylethyl, etc.; aryl groups such as phenyl, etc.; and halogenated alkyl groups such as chloromethyl, 3-chloropropyl, 3,3,3-trichloropropyl, etc. While n in the above formula has a value of 1.9 to 2.1, n $\underline{=}$ 2, i.e., a diorganopolysiloxane gum, is preferred. The molecular weight of this diorganopolysiloxane gum is not specifically restricted, and compounds useful in this regard are those typically falling within the range encompassed by the designation, "organopolysiloxane gums", in this art. In general, use will be made of compounds having a viscosity of at least $10^7$ centistokes at 25 degrees Centigrade, with average molecular weights of at least 25 x $10^4$ and preferably at least 40 x $10^4$. Furthermore, the organic groups in the organopolysiloxane comprising component (A) are not specifically restricted to within the range for R as given above. However, when the curing agent comprising component (C) consists of only a platinum-type compound without the use of an organoperoxide, it will then be necessary for component (A) to be a diorganopolysiloxane having at least 2 alkenyl groups in each molecule.

The component (B) used in the present invention, a wet-method hydrophobic reinforcing silica, is the essential component which characterizes the present invention. If functions to improve the tensile strength of the uncured silicone rubber adhesive of the present invention. Furthermore, it functions to promote the adhesive's bonding performance, to impart adhesiveness by the silicone rubber to various types of substrates after the thermal cure, and in particular to impart a durable adhesion.

This component (B) is a wet-method hydrophobic reinforcing silica constituted of the $SiO_2$ unit and organosiloxane units selected from the group comprising the $R_3SiO_{1/2}$ unit, $R_2SiO$ unit, $RSiO_{3/2}$ unit, and their mixtures, where each R in the formulas is defined as above. The quantity of organosiloxane units should be sufficient to make the surface of the reinforcing silica hydrophic, and the organosiloxane unit/$SiO_2$ unit molar ratio should fall within the range of 0.08 to 2.0 and preferably within the range of 0.08 to 1.5. The bonding performance declines when this molar ratio falls below 0.08. On the other hand, when a value of 2.0 is exceeded, the reinforcing character declines so precipitously that the primary function as a reinforcing silica can no longer be fulfilled. Furthermore, component (B) preferably contains at least 2 weight% and more preferably 3 weight% to 30 weight% methoxy groups ($CH_3O$). At below 2 weight%, the composition of the present invention suffers a large decline in adhesiveness for various types of substrates. Furthermore, with regard to its morphology, specific surface areas of at least 200 $m^2/g$ and preferably of at least 300$m^2/g$ are preferred in order to obtain silicone rubber adhesives with elevated mechanical strengths. Some compositions which contain the wet-process silica are shown in our copending application Serial Number 225,324, filed July 28, 1988.

This component is to be added at 30 to 150 parts by weight and preferably 40 to 100 parts by weight per 100 parts by weight component (A).

Component (B) can be obtained, for example, by the methods disclosed in United States Patent 4,418,165 and Japanese Patent Publication 61-56255 [56,255/86].

The curing agent of component (C) used in the present invention is a catalyst which acts to cause the curing of the composition of the present invention. An organoperoxide alone, the combination of an organoperoxide and a platinum compound, or a platinum compound alone can be used here. However, the use of only a platinum compound imposes a restriction on the organic groups in the organopolysiloxane comprising component (A), supra. Furthermore, it must be noted that SiH-containing organohydrogenpolysiloxane will then become necessary as a crosslinking component for component (A). Organoperoxides in this regard are exemplified by
dicumyl peroxide,
di-tert-butyl peroxide,
tert-butyl cumyl peroxide,
2,5-dimethyl-2,5-di(tert-butylperoxy)hexane,
2,5-dimethyl-2,5-di(tert-butylperoxy)hexyne,
1,1-bis(tert-butylperoxy)-3,3,5-trimethylcyclohexane,
benzoyl peroxide, and
2,4-dichlorobenzoyl peroxide.
Platinum compounds in this regard are exemplified by chloroplatinic acid, alcohol-modified chloroplatinic acid, platinum chelate compounds, chloroplatinic acid/olefin coordination compounds, and microparticulate platinum adsorbed over a carbon powder carrier. Component (C) is to be added in a quantity sufficient to cure the composition of the present invention. This will fall within the range of 0.1 to 10 parts by weight for organoperoxides, and within the range of 0.1 to 300 parts by weight for each 1,000,000 parts by weight of the total quantity of components (A) and (B) in the case of the platinum compounds.

The film-form silicone rubber adhesive of the present invention comprises a silicone rubber composition having the above components (A) through (C) as its principal components. In more concrete terms, this silicone rubber composition comprises organoperoxide-curing silicone rubber compositions and addition reaction-curing silicone rubber compositions. Typical examples of the former silicone rubber compositions are silicone rubber compositions consisting of the mixture of a diorganopolysiloxane gum, component (A), the wet-method hydrophobic reinforcing silica described in the preceding, component (B), and organoperoxide as described above, component (C), which may also contain the following as additional components: plasticizers such as hydroxyl-terminated dimethylsiloxanes, diphenylsilanediol, etc.; adhesion promoters such as various types of carbon-functional silanes, etc.

Diorganopolysiloxane gums in this regard are, for example, trimethylsiloxy-terminated, or dimethylvinylsiloxy-terminated, or methylphenylvinylsiloxy-terminated, or silanol-terminated dimethylpolysiloxane gums, dimethylsiloxane-methylphenylsiloxane copolymer gums, dimethylsiloxane-diphenylsiloxane copolymer gums, and dimethylsiloxane-methylvinylsiloxane copolymer gums.

In typical examples of the latter type of silicone rubber composition, SiH-containing organohydrogenpolysiloxane (crosslinker component) is blended into a mixture of diorganopolysiloxane gum which contains the alkenyl group, for example, vinyl, etc., component (A), the wet-method hydrophobic reinforcing silica as described in the preceding, component (B), and a platinum compound as described above, component (C). Also, additional components may be blended in the form of the various types of addition reaction retarders and adhesion promoters as described above.

The SiH-containing organohydrogenpolysiloxane cited here is exemplified by trimethylsiloxy-terminated methylhydrogenpolysiloxanes, trimethylsiloxy-terminated dimethylsiloxane-methylhydrogensiloxane copolymers, dimethylphenylsiloxy-terminated methylphenylsiloxane-methylhydrogensiloxane copolymers, methylhydrogenpolysiloxane cyclics, and copolymers consisting of dimethylhydrogensiloxane units and the $SiO_{4/2}$ unit.

The silicone rubber composition used in the present invention can be obtained by kneading the specified quantities of components (A) through (C) as discussed above, optionally blended with the additional components as discussed above, using, for example, a two roll, kneader, Banbury mixer, etc. Furthermore, as long as the object of the present invention is not compromised, the various additives known in the art may also be blended, for example, heat stabilizing additives such as titanium oxide, iron oxide red, cerium oxide, and barium zirconate; flame retardants such as halogen compounds and antimony oxide; and physical property modifiers such as silanes or polysiloxanes, etc.

It is essential to the present invention that the tensile strength of the uncured silicone rubber composition be within the range of 1.5 kg/cm² to 5.0 kg/cm², and values of 2.0 kg/cm² to 4.0 kg/cm² are preferred. When the tensile strength falls below 1.5 kg/cm², tearing and shape deformation will appear during handling.

On the other hand, at values in excess of 5.0 kg/cm², while handling is in fact quite easy, plasticization reversion appears during storage of the silicone rubber composition, with excessive hardening and a loss of plasticity, and finally a tendency to fissuring.

Within the context of the present invention, the tensile strength of the uncured silicone rubber composition is the value measured according to JIS K 6301.

It is important in the present invention that the thickness of the film-form silicone rubber adhesive be uniform. The thickness preferably falls with the range of 0.01 to 10 mm and more preferably within the range of 0.05 to 5 mm. When the thickness falls below 0.01 mm, the operation of forming the silicone rubber composition into a film tends to become difficult. The thickness is too large at values in excess of 10 mm, which leads after curing to the appearance of problems such as a large creep as well as a reduced bonding strength due to stress concentration in the adhesion interface.

The adhesive of the present invention is readily manufactured by extruding the silicone rubber composition as described above into film form using an extruder equipped with a die having the prescribed design. Otherwise, the silicone rubber composition may be converted into a film using a calender roll with film take off.

With regard to the actual application of the film-form silicone rubber adhesive of the present invention, it will be advantageous to punch it out and bond it in the shape of the substrate's adhesion region. For example, two types of substrates can be bonded into a single element by placing the film-form silicone rubber adhesive, punched out into the shape of the substrate's adhesion zone, on the adhesion surface of a substrate, overlaying the other substrate from above, and thermally curing this assembly under pressure (1 to 20 kg/cm²).

The present invention will be explained in the following using illustrative examples which are not to be construed as limiting the invention which is delineated in the claims. In the examples, parts = parts by weight and % = weight%.

REFERENCE EXAMPLE 1

Synthesis of the Wet-Method Hydrophobic Reinforcing Silica

118 g methanol, 32 g concentrated aqueous ammonium hydroxide, and 41 g dimethyldimethoxysilane were charged to a glass reactor, and this was mixed to homogeneity using a magnetic stirrer. While vigorously stirring this mixture, 96 g methyl orthosilicate was added at once. The reaction product became a gel after 10 seconds and stopped the stirrer. Allowing this to stand under seal at room temperature for 1 week afforded a dispersion of wet-method hydrophobic reinforcing silica. The methanol and ammonia gas were removed from this solvent solution, and the BET surface area of the obtained wet-method hydrophobic reinforcing silica was measured: this was found to be a wet-method hydrophobic reinforcing silica with a specific surface area of 620 m²/g.

EXAMPLE 1

220 parts of the wet-method hydrophobic reinforcing silica dispersion (silica content = 25 %) obtained in Reference Example 1 was introduced into 100 parts dimethylvinylsiloxy-terminated methylvinylpolysiloxane gum (99.84 mole% dimethylsiloxane units, 0.16 mole% methylvinylsiloxane units) in a kneader mixer, and this was mixed at 120 degrees Centigrade while removing the solvent. A silicone rubber base was prepared by completely removing the volatile components by mixing for an additional 2 hours at 180 degrees Centigrade under reduced pressure. A silicone rubber composition was then prepared by adding 1.5 parts 2,4-dichlorobenzoyl peroxide (50 % purity) to this silicone rubber base and kneading to homogeneity. This silicone rubber composition was sheeted (thickness = 2 mm) on a two roll, and the tensile strength of this sheet was measured according to JIS K 6301: the measured value for the tensile strength was 2.5 kg/cm$^2$. The no. 3 dumbbell was used in this tensile strength measurement.

EXAMPLE 2

350 Parts of the wet-method hydrophobic reinforcing silica dispersion (silica content = 25%) prepared in Reference Example 1 was introduced in a kneader mixer into 100 parts of the methylvinylpolysiloxane gum described in Example 1, and a silicone rubber base was obtained by otherwise following the procedure of Example 1. A silicone rubber composition was manufactured by blending 1.0 part trimethylsiloxy-terminated methylhydrogensiloxane-dimethylsiloxane copolymer (7 centistokes, silicon-bonded hydrogen atom content = 0.8%), 10 ppm as platinum of a chloroplatinic acid/methylvinylsiloxane complex, and 100 ppm methyltris(methylisobutynoxy)silane into 100 parts of the aforementioned silicone rubber base. The tensile strength of this silicone rubber composition was measured as in Example 1: the tensile strength was 3.5 kg/cm$^2$.

EXAMPLE 3

The silicone rubber composition prepared in Example 1 was extruded into a film by passage from an extruder through a suitable nozzle to give a film-form (thickness = 0.5 mm, width = 5 cm) silicone rubber adhesive. At the same time, a 5 cm-wide silicone-coated cloth tape was prepared: this consisted of a glass cloth (plain weave, thickness = 0.5 mm, count = 24 x 19/25 mm) coated with silicone rubber (thickness = 0.8 mm) on both surfaces. The silicone rubber adhesive film was placed between segments of this silicone-coated fabric tape. Placing this assembly between platens, thermal curing was carried out for 5 minutes as 150 degrees Centigrade/5 kg/cm$^2$. A laminate was obtained in which the silicone rubber-coated glass cloth tape was tightly bonded and mutually unified into a single element.

EXAMPLE 4

Using a calender roll, the silicone rubber composition prepared in Example 2 was formed into a 0.1 mm-thick film to give a film-form silicone rubber adhesive. This silicone rubber adhesive film was cut into a 5 cm square, which was placed between 2 glass plates (5 cm x 5 cm x 5 cm). Air bubbles between the silicone rubber adhesive and glass plates were removed at reduced pressure in a vacuum desiccator. This test assembly was then placed between two platens and heated for 10 minutes at 150 degrees Centigrade/10 kg/cm$^2$. The glass plates were tightly bonded and unified into a single joined glass element.

COMPARISON EXAMPLE 1

A silicone rubber composition was prepared by the procedure of Example 1 using a commercially available dry-method hydrophobic silica with a specific surface area of 200 m$^2$/g (R-974 from Degussa) in place of the wet-method hydrophobic reinforcing silica used in Example 1. This silicone rubber composition had a tensile strength of 1.2 kg/cm$^2$ when unvulcanized. This silicone rubber composition was then formed into a 0.1 mm-thick film used a calender roll. This film-form product was cut into 5 cm squares of silicone rubber adhesive film, and the attempt was also made to place this film-form adhesive between two glass plates as in Example 2. However, when this silicone rubber adhesive film was held with a pincette and lifted up, its shape became twisted and it drooped, and it could not maintain the prescribed shape and was impossible to handle.

Because the film-form silicone rubber adhesive of the present invention is prepared from a silicone rubber composition with an uncured tensile strength (JIS K 6301) of 1.5 kg/cm$^2$ to 5.0 kg/cm$^2$ comprising components (A) through (C) and in particular containing a special wet-method hydrophobic reinforcing silica as component (B), it is characterized by simplicity in handling and an excellent workability, and in particular by the ability tightly to bond and unify adherend pairs when used with substrates which have level surfaces, such as fabrics, glass, and rubber sheet, etc.

**Claims**

1. A silicone rubber adhesive film prepared from a silicone rubber composition which has as its principal components

   (A) 100 parts by weight of organopolysiloxane gum having the average unit formula

   $$R_nSiO_{(4 - n)/2}$$

in the formula, R is a substituted or unsubstituted monovalent hydrocarbon group and n = 1.9 to 2.1,

(B) 30 to 150 parts by weight wet-method hydrophobic reinforcing silica having a specific surface area of at least 200 $m^2/g$ and composed of $SiO_2$ units and organosiloxane units selected from the group comprising $R_3SiO_{1/2}$ units, $R_2SiO$ units, $RSiO_{3/2}$ units, and their mixtures, where each R in the formulas is defined as above, with the proviso that the organosiloxane unit to $SiO_2$ unit molar ratio is 0.08 to 2.0, and

(C) curing agent,

wherein said silicone rubber composition is in the form of an uncured sheet which has a tensile strength at break in the range of 1.5 $kg/cm^2$ to 5.0 $kg/cm^2$.

2. The silicone rubber adhesive film in accordance with claim 1 in which the film has a thickness of from 0.01 to 10 mm.

3. The silicone rubber adhesive film in accordance with claim 2 in which the uncured sheet has a tensile strength at break in the range of from 2.0 to 4.0 $kg/cm^2$.

## Revendications

1. Une pellicule adhésive de caoutchouc de silicone préparée à partir d'une composition de caoutchouc de silicone ayant pour constituants principaux :

   (A) 100 parties en poids de gomme d'organopolysiloxane répondant à la formule unitaire moyenne

   $R_nSiO_{(4-n)/2}$ ,

   formule dans laquelle R est un groupe hydrocarboné monovalent substitué ou non substitué et n = 1,9 à 2,1,

   (B) 30 à 130 parties en poids de silice de renforcement hydrophobe préparée par voie humide ayant une surface spécifique d'au moins 200 $m^2/g$ et composée de motifs $SiO_2$ et de motifs organosiloxanes choisis dans le groupe formé par les motifs $R_3SiO_{1/2}$, les motifs $R_2SiO$, les motifs $RSiO_{3/2}$ et leurs mélanges, R ayant dans les formules ci-dessus la même définition que précédemment, étant entendu que le rapport molaire des motifs organosiloxanes aux motifs $SiO_2$ est de 0,08 à 2,0, et

   (C) de l'agent durcisseur,

   dans laquelle ladite composition de caoutchouc de silicone est sous la forme d'une feuille non durcie ayant une résistance à la traction à la rupture se situant dans l'intervalle de 2,5 à 5,0 $kg/cm^2$.

2. La pellicule adhésive de caoutchouc de silicone selon la revendication 1 dans laquelle la pellicule présente une épaisseur de 0,01 à 10 mm.

3. La pellicule adhésive de caoutchouc de silicone selon la revendication 2 dans laquelle la feuille non durcie présente une résistance à la traction à la rupture comprise dans l'intervalle de 2,0 à 4,0 $kg/cm^2$.

## Patentansprüche

1. Silikon-Kautschuk-Klebstoff-Film hergestellt aus einer Silikon-Kautschuk-Zusammensetzung, die als Hauptkomponenten aufweist:

   A) 100 Gewichtsteile Organopolysiloxangummi mit der durchschnittlichen Einheitsformel

   $R Si_nO_{(4-n)/2}$

   wobei in der Formel R eine substituierte oder unsubstituierte monovalente Kohlenwasserstoffgruppe ist und n 1,9 bis 2,1 ist,

   (B) 30 bis 150 Gewichtsteile gefälltes hydrophobes verstärkendes Siliciumoxid mit einer spezifischen Oberfläche von mindestens 200 $m^2/g$, das zusammengesetzt ist aus $SiO_2$ Einheiten und Organosiloxaneinheiten ausgewählt aus der Gruppe bestehend aus $R_3SiO_{1/2}$ Einheiten, $R_2SiO$ Einheiten, $RSiO_{3/2}$ Einheiten und deren Mischungen, wobei jeder Rest R in den Formeln definiert ist wie oben, mit dem Vorbehalt, daß das molare Verhältnis von Organosiloxaneinheiten zu $SiO_2$ Einheiten 0,08 bis 2,0 ist und

   (C) ein Härtungsmittel;

   wobei die Silikon-Kautschuk-Zusammensetzung in Form einer ungehärteten Folie ist, die eine Reißfestigkeit im Bereich von 1,5 $kg/cm^2$ bis 5,0 $kg/cm^2$ hat.

2. Silikon-Kautschuk-Klebstoff-Film gemäß Anspruch 1, worin der Film eine Dicke von 0,01 bis 10 mm hat.

3.  Silikon-Kautschuk-Klebstoff-Film gemäß Anspruch 2, worin die ungehärtete Folie eine Reißfestigkeit im Bereich von 2,0 bis 4,0 kg/cm$^2$ hat.